# EUROPÄISCHE PATENTANMELDUNG

(11) **EP 2 445 090 A1**
(43) Veröffentlichungstag der Anmeldung: **25.04.2012**
(21) Anmeldenummer: 10188543.2
(22) Anmeldetag: 22.10.2010
(51) Int. Cl.: H02K 7/102

(54) **Dynamoelektrische Maschine mit Haltebremsvorrichtung**

(71) Anmelder: SIEMENS AKTIENGESELLSCHAFT, 80333 München (DE)
(72) Erfinder: Sopp, Helmut, 97650, Fladungen (DE); Tropoja, Ardian, 97702, Münnerstadt (DE)

(57) **Zusammenfassung**

Die Erfindung betrifft eine dynamoelektrische Maschine (1) mit
- einem aus axial geschichteten Blechen gebildeten Blechpaket eines Stators (2), wobei in axial verlaufenden Nuten dieses Blechpakets ein Wicklungssystem angeordnet ist, das an den Stirnseiten des Blechpakets Wickelköpfe (3) ausbildet,
- einem aus axial geschichteten Blechen aufgebauten Rotor (5), der an einer seiner Stirnseite eine Haltebremsvorrichtung aufweist, die radial innerhalb des Wickelkopfes (3) des Stators (2) angeordnet ist, wobei die Haltebremsvorrichtung (7) einen axial beweglichen Magnetanker (10) eine Magnetwicklung (9), einen Magnetkörper (8) aufweist,
- einer Welle (6), die drehfest mit dem Rotor (5) verbunden ist,
- zumindest einem Lager (13), dessen Außenring (23) in einem Lagerschild (14) angeordnet ist und dessen Innenring auf der Welle (6) angeordnet ist, wobei die Bremsvorrichtung (7) zwischen Lager (13) und Rotor (5) positioniert ist,
- einem gemeinsamen Kühlsystem für zumindest Lager (13) und Haltebremsvorrichtung (7),
- der Rotor (5) eine dem Magnetanker (10) gegenüberliegende Bremsfläche (17) aufweist.

## Beschreibung

Die Erfindung betrifft eine dynamoelektrische Maschine mit einem aus axial geschichteten Blechen gebildeten Blechpaket eines Stators, wobei in axial verlaufenden Nuten dieses Blechpakets ein Wicklungssystem angeordnet ist, das an den Stirnseiten des Blechpakets Wickelköpfe ausbildet, einem aus axial geschichteten Blechen aufgebauten Rotor, der an einer seiner Stirnseite eine Haltebremsvorrichtung aufweist, die radial innerhalb des Wickelkopfes des Stators angeordnet ist, wobei die Haltebremsvorrichtung einen axial beweglichen Magnetanker eine Magnetwicklung, einen Magnetkörper aufweist, einer Welle, die drehfest mit dem Rotor verbunden ist, zumindest einem Lager, dessen Außenring in einem Lagerschild angeordnet ist und dessen Innenring auf der Welle angeordnet ist, wobei die Bremsvorrichtung zwischen Lager und Rotor positioniert ist, wobei der Rotor eine dem Magnetanker gegenüberliegende Bremsfläche aufweist.

Der Ein- bzw. Anbau von elektromagnetischen Haltebremsen in dynamoelektrischen Maschinen vergrößert das Bauvolumen der gesamten dynamoelektrischen Maschine erheblich. Des Weiteren ist unter anderem die Kühlung des Rotors und der Welle einer dynamoelektrischen Maschine, insbesondere bei einem kompakten Aufbau des gesamten Antriebs und bei unterschiedlichen Betriebszuständen der dynamoelektrischen Maschine äußerst aufwändig.

Ausgehend davon liegt der Erfindung die Aufgabe zugrunde, eine dynamoelektrische Maschine mit einer elektromagnetischen Haltebremse zu schaffen, die sowohl das Bauvolumen der dynamoelektrischen Maschine nicht vergrößert als auch für eine ausreichende Kühlung gewährleistet.

Die Lösung der gestellten Aufgabe gelingt durch eine dynamoelektrische Maschine mit den Merkmalen des Anspruchs 1.

Durch die Anordnung der Haltebremsvorrichtung radial innerhalb des Wickelkopfes des Stators, wird nunmehr der verfügbare Bauraum optimal ausgenutzt und es stellt sich keine axiale Verlängerung der gesamten dynamoelektrischen Maschine ein. Damit ist auch weiterhin das Lagerschild mit seinem Lager vergleichsweise nahe an dem Rotor angebracht. Dies hat den Vorteil, dass bei längeren Wellenabschnitten zwischen zwei Lagern oder gar bei einer fliegenden Welle, d.h. wenn die dynamoelektrische Maschine nur ein Lager aufweist, Wellenschwingungen reduziert werden.

Des Weiteren wird nun durch ein Kühlsystem, dessen Einlauf und Auslauf über das Lagerschild erfolgt, erfindungsgemäß auch der Magnetkörper der Haltebremse gekühlt.

Vorteilhafterweise sind dabei Magnetkörper, Außenring des Lagers und Lagerschild kompakt zusammengebaut und gegeneinander verpresst angeordnet, so dass die Wärmeübergänge zwischen den einzelnen Bauelementen ideal sind. Daher kann sowohl der ringförmige Kühlkanal des Magnetkörpers Abwärme der Bremse als auch Abwärme des Außenrings des Lagers und des Lagerschildes mit aufnehmen und abführen.

Des Weiteren wird durch einen äußerst geringen Abstandsspalt des Magnetkörpers zu einer Welle auch die Abwärme der Welle über den Magnetkörper aufgenommen und an das Kühlmedium abgegeben. Dies schafft auch bei einem kompakten Aufbau der dynamoelektrischen Maschine eine Vergleichmäßigung der Temperatur.

Idealerweise wird durch den kompakten Aufbau nunmehr auch Abwärme des Wickelkopfes, die zum einen radial nach innen abgegeben wird und somit auf den Magnetkörper Wärme überträgt, als auch bei einer radial nach außen abgegebenen Wärme an das Lagerschild Wärme des Wickelkopfes abgeführt über das vorhandenen gemeinsame Kühlsystem abgeführt.

Dies führt zu einem verbesserten Betriebsverhalten der gesamten dynamoelektrischen Maschine, insbesondere bei denen in der Norm niedergelegten Aussetzbetriebsarten.

In einer vorteilhaften Ausgestaltung arbeitet die Haltebremse der erfindungsgemäßen dynamoelektrischen Maschine nach dem Ruhestromprinzip, d.h. beim Bremsen wird dabei die Haltebremsvorrichtung zum einen durch Federkraft oder Permanentmagnete betätigt. Das Lüften der Haltebremse erfolgt durch Magnetkraft, wobei das dafür notwendige Magnetfeld durch eine Magnetwicklung in einem Magnetkörper erzeugt wird. Wird der Motor abgeschaltet oder fällt die Versorgungsspannung der Magnetwicklung aus, fällt die Bremse aufgrund der Federkraft oder der Permanentmagnete selbsttätig wieder ein und bremst somit die elektrische Maschine ab.

Die Erfindung eignet sich für gehäuselose Maschinen als auch für dynamoelektrische Maschinen in einem Gehäuse.

Die Erfindung sowie weitere vorteilhafte Ausgestaltungen der Erfindung sind den Figuren zu entnehmen. Darin zeigen:
- FIG 1: einen Teillängsschnitt einer dynamoelektrischen Maschine mit Haltebremsvorrichtung,
- FIG 2: einen Ausschnitt eines Längsschnitts einer eingefallenen Bremse,
- FIG 3: einen Ausschnitt eines Längsschnitts einer gelüfteten Bremse.

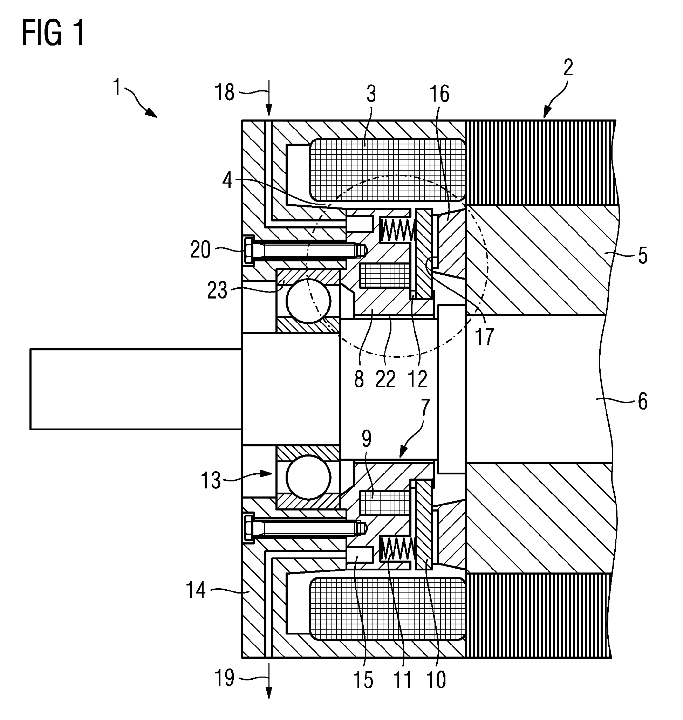

FIG 1 zeigt in einem Teillängsschnitt eine dynamoelektrische Maschine 1, die gehäuselos ausgeführt ist. Dabei ist ein Stator 2 dargestellt, der aus geschichteten Blechen aufgebaut ist. Innerhalb dieses Blechpakets, in im wesentlich axial verlaufenden Nuten, die nicht näher dargestellt sind, befindet sich ein Wicklungssystem, das an der Stirnseite des Stators 2 jeweils einen Wickelkopf 3 ausbildet. An jeder Stirnseite des Stators 2 wird somit ein Wickelkopf 3 ausgebildet.

Näher betrachtet wird jedoch nur der diesseitige Wickelkopf 3, da dort auch eine Haltebremsvorrichtung 7 angeordnet ist.

In einem durch den Wickelkopf 3 gebildeten Wickelkopfraum 4 ist nunmehr eine Haltebremsvorrichtung 7 angeordnet, die sich aus einem Magnetkörper 8, einer Magnetwicklung 9 und einem Magnetanker 10 im Wesentlichen zusammensetzt. Dabei ist der Magnetanker 10 über einen Schiebesitz mit Verzahnung axial verschiebbar. Durch die Federkraft einer Feder wird der Magnetanker 10 in axialer Richtung auf eine Bremsfläche 17 eines Rotors 5 gedrückt. Die Haltebremsvorrichtung 7 arbeitet nach dem Ruhestromprinzip. Das bedeutet, dass solange die Magnetwicklung 9 nicht bestromt ist, die Federkraft aufgrund ihrer axialen Anpresskraft den Rotor 5 am Drehen hindert. Erst durch eine Bestromung der Magnetwicklung 9 wird ein Magnetfeld aufgebaut, das entgegen der Federkraft den Magnetanker 10 von der Bremsfläche 17 wegzieht.

Ein Rotor 5, der in diesem Fall als Kurzschlussläufer ausgebildet ist, weist an seiner Stirnseite einen Kurzschlussring 16 auf, der dem Magnetanker 10 zugewandt eine Bremsfläche 17 aufweist. Die Bremsfläche 17 und der Magnetanker 10 bewirken nunmehr über einen Form- oder Reibschluss ein Verzögern oder die Feststellung des Rotors 5. Der Magnetkörper 8 ist von einer Welle 6 beabstandet, derart dass sich ein Abstandsspalt 22 von der Welle 6 einstellt über die aber dennoch Abwärme der Welle 6 durch Konvektion auf den Magnetkörper übertragen werden kann.

Des Weiteren ist die Welle 6 über ein Lager 13 und dessen Lagerschild 14 gelagert. Das Lagerschild 14 fixiert einen Außenring 23 des Lagers 13 als auch über eine Befestigung, insbesondere eine Schraubvorrichtung den Magnetkörper 8. Des Weiteren umgibt das Lagerschild 14 in dieser Ausführungsform den radial äußeren Bereich des Wickelkopfes 3 und schließt mit dem Blechpaket des Stators 2 bündig ab. Demzufolge ist nunmehr auch ein Wärmeübergang des Wickelkopfes 3 auf den Magnetkörper 8 und das Lagerschild 14 möglich.

Aufgrund der kompakten Ausführung von Lagerschild 14 und Magnetkörper 8 und insbesondere Außenring 23 des Lagers 13 kann nunmehr durch ein Kühlsystem, dessen Kühlmitteleinlass 18 und Kühlmittelauslass 19 ebenfalls im Lagerschild 14 angeordnet sind eine Gas- oder Flüssigkeitskühlung für den Magnetkörper 8 und das Lagerschild 14 vorgesehen werden. Im Magnetkörper 8 verläuft ein ringförmiger Kühlkanal 15 um die Welle 6. Durch diesen Kühlkanal 15 werden nunmehr Abwärme der Welle 6, des Außenrings 23 des Lagers und des Rotors 5, sei es ein Wickelkopf 3 einer Rotorwicklung, von Permanentmagneten oder allgemein Eisenverluste des Rotorblechpakets aufgenommen und abgeführt.

Diese Kühlung ist insbesondere vorteilhaft, wenn die dynamoelektrische Maschine in einem periodischen Aussetzbetrieb arbeitet, da nunmehr ein thermischer Beharrungszustand leichter erreicht werden kann.

Im vorliegenden Ausführungsbeispiel ist der Rotor 5 als Kurzschlussläufer ausgeführt, d.h. an seinen Stirnseiten bilden sich Kurzschlussringe 16 aus. Selbstverständlich ist die prinzipiell Anordnung und Kühlung der Haltebremsvorrichtung auch bei einem permanenterregten Synchronmotor möglich, da lediglich dort der Rotor 5 Permanentmagnete aufweist und somit als Bremsfläche 17 eine Endscheibe an seiner direkten Stirnseite aufzuweisen hat, um die Funktion einer Haltebremsvorrichtung zu unterstützen.

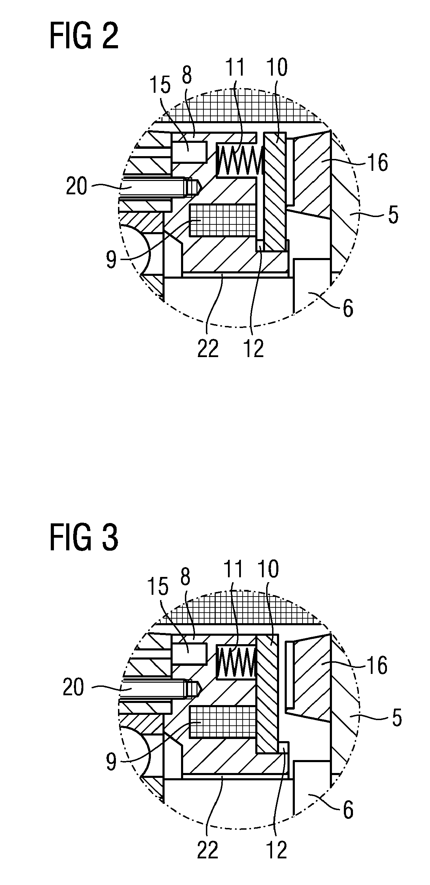

FIG 2 zeigt in prinzipieller Darstellung eine eingefallene Bremse der Haltebremsvorrichtung 7, wobei die Magnetwicklung 9 in diesem Fall nicht bestromt ist bzw. die Versorgungsspannung ausgefallen ist, so dass aufgrund der axial wirkenden Federkraft einer Feder 11 der Magnetanker 10 axial gegen eine Bremsfläche 17 des Kurzschlussringes 16 gedrückt wird und somit eine Bremsung einleitet bzw. einen bereits gebremsten Rotor 5 in seiner Position fixiert.

FIG 3 zeigt eine gelüftete Bremse, in dem der Magnetanker 10 entgegen der Federkraft der Feder 11 durch die Bestromung der Magnetwicklung 9 an den Magnetkörper 8 gezogen wird, wobei der Magnetanker 10 durch den Schiebesitz mit Verzahnung geführt wird.

## Patentansprüche

1. Dynamoelektrische Maschine (1) mit
- einem aus axial geschichteten Blechen gebildeten Blechpaket eines Stators (2), wobei in axial verlaufenden Nuten dieses Blechpakets ein Wicklungssystem angeordnet ist, das an den Stirnseiten des Blechpakets Wickelköpfe (3) ausbildet,
- einem aus axial geschichteten Blechen aufgebauten Rotor (5), der an einer seiner Stirnseite eine Haltebremsvorrichtung aufweist, die radial innerhalb des Wickelkopfes (3) des Stators (2) angeordnet ist, wobei die Haltebremsvorrichtung (7) einen axial beweglichen Magnetanker (10) eine Magnetwicklung (9), einen Magnetkörper (8) aufweist,
- einer Welle (6), die drehfest mit dem Rotor (5) verbunden ist,
- zumindest einem Lager (13), dessen Außenring (23) in einem Lagerschild (14) angeordnet ist und dessen Innenring auf der Welle (6) angeordnet ist, wobei die Bremsvorrichtung (7) zwischen Lager (13) und Rotor (5) positioniert ist,
- einem gemeinsamen Kühlsystem für zumindest Lager (13) und Haltebremsvorrichtung (7),
- der Rotor (5) eine dem Magnetanker (10) gegenüberliegende Bremsfläche (17) aufweist.

2. Dynamoelektrische Maschine (1) nach Anspruch 1, **da** - **durch gekennzeichnet** , dass das Kühlsystem einen Kühlmitteleinlass (18) und einen Kühlmittelauslass (19) aufweist, die jeweils am Lagerschild (14) angeordnet sind und innerhalb der Haltebremsvorrichtung (7) ein um die Welle (6) verlaufenden ringförmigen Kühlkanal (15) zugeordnet sind.

3. Dynamoelektrische Maschine (1) nach Anspruch 2, **dadurch gekennzeichnet , dass** der ringförmige Kühlkanal (15) im Magnetkörper (8) angeordnet ist.

4. Dynamoelektrische Maschine (1) nach einem der vorhergehenden Ansprüche, d a **durch gekennzeichnet** , dass die Haltebremsvorrichtung (7) nach dem Ruhestromprinzip arbeitet, in dem der Magnetanker (10) durch eine Feder oder einen Permanentmagnet an die Bremsfläche (17) des Rotors (5) bei abgeschalteter Magnetwicklung gedrückt wird.
